# EUROPÄISCHE PATENTSCHRIFT

(11) **EP 1 409 972 B1**
(45) Veröffentlichungstag und Bekanntmachung des Hinweises auf die Patenterteilung: **20.06.2007**
(21) Anmeldenummer: 02791455.5
(22) Anmeldetag: 16.07.2002
(51) Int. Cl.: G01J 1/04, G01J 5/08, G08C 17/02, G08B 21/22

(54) **VERFAHREN UND VORRICHTUNG ZUR AUSWERTUNG ELEKTROMAGNETISCHER STRAHLUNG**
METHOD AND DEVICE FOR EVALUATING ELECTROMAGNETIC RADIATION
PROCEDE ET DISPOSITIF POUR EVALUER UN RAYONNEMENT ELECTROMAGNETIQUE

(30) Priorität: 21.07.2001 DE 10135705
(43) Veröffentlichungstag der Anmeldung: 21.04.2004
(73) Patentinhaber: FAGUS-GRECON GRETEN GMBH & CO. KG, 31061 Alfeld (DE)
(72) Erfinder: SCHÄCKEL, Ralf, 31085 Everode (DE)
(74) Vertreter: Sobisch, Peter
(86) Internationale Anmeldenummer: PCT/EP2002/007901
(87) Internationale Veröffentlichungsnummer: WO 2003/012381

(56) Entgegenhaltungen:
- EP-A- 0 472 321
- DE-A- 19 951 403
- DE-C- 19 531 917
- US-A- 4 365 896

## Beschreibung

Die Erfindung bezieht sich auf ein Verfahren entsprechend dem Oberbegriff des Anspruchs 1. Sie bezieht sich ferner auf eine Vorrichtung entsprechend dem Oberbegriff des Anspruchs 2.

Eine Auswertung elektromagnetischer Strahlung findet im gesamten Bereich der Technik in unterschiedlichsten Funktionszusammenhängen statt. Lediglich beispielhaft sei in diesem Zusammenhang auf die Steuerungstechnik, z.B. in der Form von Lichtschranken, die Mess- und Analysentechnik, z.B. in der Form optisch spektroskopischer Verfahren und nicht zuletzt, die Sicherheits- und Überwachungstechnik, beispielsweise zur Überwachung von Mehrphasenströmungen zwecks Vermeidung von Betriebsstörungen als Folge von Verstopfungen, jedoch auch infolge eines Funkenfluges bzw. eines im Entstehen begriffenen Brandherdes hingewiesen. Insbesondere soweit es um Anwendungsfälle geht, deren Zweck in der Warnung vor gefährlichen Betriebszuständen liegt, besteht ein verstärktes Bedürfnis, die hierzu installierten Systeme hinsichtlich einer einwandfreien Wirkungsweise zu überwachen. Auch hierzu sind bereits unterschiedliche Techniken bekannt geworden.

Lichtschranken bestehen üblicherweise aus einer Sendeeinheit einerseits und einer, dieser mit Abstand gegenüberliegenden Empfangseinheit andererseits, wobei letztere zum Empfang eines elektromagnetischen, durch die Sendeeinheit ausgestrahlten Signals eingerichtet ist und wobei durch die Unterbrechung des Empfangs wiederum ein Signal, ein Schaltvorgang oder dergleichen ausgelöst wird. Alternativ sind diese Lichtschranken auch in der Form bekannt, dass ein von einer Sendeeinheit kontinuierlich abgestrahltes Lichtsignal an einer Spiegeleinheit reflektiert wird, wobei wiederum eine Empfangseinheit vorgesehen ist, die das reflektierte Signal empfängt. Es ist bekannt, das Problem einer mit zunehmender Verschmutzung der zur Aus- und Einkopplung des Signals bestimmten Fläche einhergehenden zunehmenden Dämpfung dadurch zu behandeln, dass ein Absinken des empfangenen Signalpegels unter einen vorgegebenen Wert als Beginn einer Betriebsstörung interpretiert wird, und zwar bevor es zu einem völligen Ausfall der Lichtschranke kommt. Eine Funktionsüberwachung der Auswerteschaltkreise innerhalb der eingesetzten Sende- und Empfangseinheit findet hierbei nicht statt, so dass Störungen, z.B. ein Kabelbruch oder dergleichen in diesem Bereich nicht ohne Weiteres erkennbar sind.

Elektromagnetische Strahlung wird in einem sehr weiten spektralen Bereich verwendet, und zwar stets dem konkreten Anwendungsfall angepasst, wobei nicht signifikante spektrale Anteile der Strahlung im Regelfall ausgeblendet werden. Aus dem Prospektblatt "Überwachungsanlage für MDF-Zyklon ABC 7" der Anmelderin ist es bekannt, bei einem, zum Abschalten von Feststoffen, insbesondere faserigen Stoffen benutzten Zyklonabscheider eine Ausbildung von Materialstaus im Austrittsbereich dadurch zu überwachen, dass - einander diametral gegenüberliegend in den Wandungen des Abscheiders eine Sende- und eine Empfangseinheit installiert werden, die auf eine Ausstrahlung bzw. einen Empfang von Infrarotstrahlung eingerichtet sind, wobei über den Signalpegel die augenblickliche Feststoffbefrachtung der Strömung innerhalb des Abscheiders erkennbar ist und bei einer beginnenden Verstopfung eine automatische Abschaltung der pneumatischen Förderung bewirkt werden kann.

Aus einem weiteren Prospekt "Funkenlöschanlagen Sicherheit für Ihre Produktion" der Anmelderin sind sogenannte Funkenmelder bekannt, die zur Überwachung des Funkenfluges bei pneumatischen Förderanlagen einsetzbar sind. Diese sind in ihrer spektralen Empfindlichkeit auf ein Erkennen von Funken oder anderer zündfähiger Gefahrenelemente wie z.B. Glimmnester abgestimmt und werden jeweils durch Empfangseinheiten gebildet, die einander diametral bezüglich der zu überwachenden Rohrleitung gegenüberliegende angeordnet sind. Zur Prüfung der einwandfreien Wirkungsweise der Auswerteschaltkreise ist zusätzlich eine Testdiode vorgesehen, welche ein Testsignal abstrahlt, das von der Empfangseinheit erkannt und interpretiert wird. Durch diesen Funktionstest, der manuell oder automatisiert nach Maßgabe z.B. vorgebbarer Zeitintervalle oder auch ereignisgesteuert automatisch durchführbar ist, ist eine zuverlässige Überprüfung des Funkenmelders auf interne, d.h. innerhalb der Auswerteschaltkreise eventuell vorhandene Störungen oder Beschädigungen möglich. Es ist bei derartigen Funkenmeldern ferner bekannt, zur Überprüfung einer möglichen Verschmutzung der zum Einkoppeln zu empfangender Strahlung bestimmten Bereiche eine externe Testsonde in der Rohrleitung vorzusehen, die beispielsweise dem zu überprüfenden Funkenmelder gegenüberliegt, über welche ein Testsignal generiert wird, von dessen Empfangsqualität Informationen über den Verschmutzungsgrad herleitbar sind. Dies macht jedoch zum Einen die Anbringung einer Öffnung zur Montage der Testsonde erforderlich und ist somit durch einen erhöhten Installationsaufwand gekennzeichnet. Hinzu tritt das Problem, dass auch die Testsonde im Regelfall gleichen Verschmutzungsbedingungen wie der zu überprüfende Funkenmelder selbst ausgesetzt ist, so dass Störungen infolge einer Verschmutzung trotz des erhöhten Aufwandes nicht sicher auszuschließen sind.

Schließlich ist aus der DE 195 31 917 C1 ein Detektor für elektromagnetische Strahlung bekannt, der als Flammenmelder zur Überwachung von Räumen oder industriellen Prozessen konzipiert ist, bei welchem innerhalb eines mit einem Fenster zum Einkoppeln zu empfangender Strahlung bestimmten Gehäuses sowohl ein Empfänger als auch ein Sender angeordnet sind, wobei von dem Sender ausgehende Strahlung an der Innenseite der Fensteroberfläche reflektiert wird und wobei die Verschmutzung der Außenseite des Fensters anhand dessen Reflexionseigenschaften erkennbar ist, so dass eine Überwachung durch Auswertung des reflektierten Signals erfolgt. Wenngleich bei diesem Gerät eine Verschmutzung der Außenseite des Fensters festgestellt wird, findet keine Überprüfung der Auswerteschaltkreise bzw. des Gerätes im Übrigen statt.

Die Wirkungsweise einer zur Überwachung einer Rohrleitung zur pneumatischen Förderung eingesetzten Vorrichtung kann durch eine Materialanhäufung innerhalb der Rohrleitung, durch Verschmutzung der zum Einkoppeln von Strahlung bestimmten Fläche und durch Defekte elektrischer Auswerteschaltkreise beeinträchtigt sein. Mit den bekannten Vorrichtungen kann diesen möglichen Störquellen nur unvollkommen begegnet werden.

Es ist vor diesem Hintergrund die Aufgabe der Erfindung, ein Verfahren der eingangs bezeichneten Art möglichst ohne zusätzlichen Installationsaufwand dahingehend auszugestalten, dass sowohl äußere als auch innere mögliche Störquellen, die das Arbeitsergebnis beeinträchtigen, einwandfrei erkennbar und insbesondere lokalisierbar werden. Gelöst ist diese Aufgabe bei einem gattungsgemäßen Verfahren durch die Merkmale des Kennzeichnungsteils des Anspruchs 1.

Erfindungswesentlich ist hiernach, dass dem zu überwachenden Raum wenigstens zwei Messköpfe in einer einander gegenüberliegenden Anordnung zugeordnet werden, deren jeder zum Ein- und Auskoppeln von Strahlung eingerichtet ist. Die Messköpfe können somit untereinander völlig gleich beschaffen sein. Sie sind vorzugsweise hinsichtlich ihrer spektralen Empfindlichkeit dahingehend eingerichtet, dass lediglich eine solche Strahlung empfangen wird, die dem zu überwachenden Parameter des Raumes entspricht. Lediglich beispielhaft und ohne hierauf beschränkt zu sein sei eine Überwachung des Raumes auf ein Auftreten von Wärmequellen, z.B. Funken erwähnt, so dass von der einwandfreien Arbeitsweise des Verfahrens ein beträchtliches Sicherheitsrisiko abhängen kann. Erfindungswesentlich ist nunmehr, dass eine Funktionsüberprüfung mit der Maßgabe vorgenommen wird, dass durch den Sender der einen Messkette ein definiertes Testsignal, z.B. ein Testimpuls abgestrahlt wird, der an der Grenzfläche zu dem zu überwachenden Raum zum Teil reflektiert wird, wobei dieser Teil durch den Empfänger der gleichen Messkette empfangen wird. Ein übriger Teil des Testsignals durchtritt die Grenzfläche und durchquert den zu überwachenden Raum bis zu dem Empfänger der gegenüberliegenden Messkette. An den Ausgängen der beiden Messketten werden somit Signale bereitgestellt, die die beiden genannten Strahlungsanteile beschreiben, wobei aufbauend auf diesen beiden Signalanteilen beispielsweise anhand eines Vergleichs mit Referenzsignalen eine Aussage betreffend die aktuelle Funktionsweise der Vorrichtung abgeleitet wird. Anhand des reflektierten Signalanteiles ist beispielsweise der Verschmutzungsgrad der Grenzfläche erkennbar, nachdem deren Reflexionsverhalten durch eben diese Verschmutzung in einer charakteristischen Weise verändert wird. Anhand des, die Grenzfläche durchtretenden und durch den Empfänger des gegenüberliegenden Messkopfes empfangenen Signals ist der Zustand des Raumes als solchem ebenso erkennbar bzw. überprüfbar wie die Funktion der Meßkette. Wird die Vorrichtung beispielsweise bei einer zum pneumatischen Transport von Feststoffen benutzten Rohrleitung benutzt, kann aus dem letztgenannten Signalanteil eine Aussage betreffend eine ungewöhnliche Materialanhäufung innerhalb der Rohrleitung abgeleitet werden. Umgekehrt ergibt sich neben Hinweisen auf die Verschmutzung der genannten Grenzfläche aus dem ersten Signalanteil auch eine Aussage über die Funktion der zur Auswertung des empfangenen Signalanteils und zur Generierung eines diesen beschreibenden elektrischen Messwertes bestimmten elektronischen Bauelemente. Erfindungsgemäß wird somit in Abweichung von dem Stand der Technik nicht nur eine äußere Verschmutzung einer Grenzfläche detektiert sondern es werden gleichzeitig der aktuelle Zustand des Raumes unter Einschluss des gegenüberliegenden Messkopfes in diesen Test einbezogen. Ein solcher, durch das Auslösen eines Testimpulses über den einen Messkopf eingeleiteter Testvorgang wird in der Folge in identischer Weise über den Sender des zweiten Messkopfes ausgelöst, so dass am Ende eines vollständigen Prüfzyklus eine Aussage über den aktuellen Zustand beider Messköpfe vorliegt. In Abweichung ebenfalls zu dem eingangs dargelegten Stand der Technik ergibt sich infolge des Wegfalls einer besonderen Testsonde ein geringerer Eingriff in die Wandungen des zu überwachenden Raumes und somit insgesamt ein verminderter Installationsaufwand nachdem vorhandene Leitungen der Messköpfe zur Übertragung von Steuersignalen, beispielsweise zur Auslösung eines Testimpulses und zur Rückmeldung empfangener Signale benutzt werden.

Der Erfindung liegt ferner die Aufgabe zugrunde, eine zur Durchführung des Verfahrens konzipierte Vorrichtung zu entwerfen, welche im Vergleich zum Stand der Technik durch einen geringeren Installationsaufwand und ein höheres Maß an Zuverlässigkeit bei der Erkennung sich anbahnender Betriebsstörungen der Vorrichtung gekennzeichnet ist. Gelöst ist diese Aufgabe bei einer solchen Vorrichtung durch die Merkmale des Kennzeichnungsteils des Anspruchs 2.

Die wesentlichen Komponenten der Vorrichtung bestehen aus wenigsten zwei Messketten und einer regelmäßig entfernt von diesen angeordneten Steuerungs- und Auswertungseinheit. Die Messketten ihrerseits bestehen aus einem Messkopf, der die Grenzfläche zu dem zu überwachenden Raum bildet, einem Sender sowie einem Empfänger und diesen nachgeordneten Auswerteschaltkreisen, die einerseits zur Generierung eines Testsignals und dessen Abstrahlung über den Sender und andererseits zum Empfang von Strahlung über den Empfänger und deren Umsetzung in ein diese beschreibendes elektrisches Messsignal bestimmt und eingerichtet sind. Jede Messkette ist somit auf ihrem, dem Messkopf gegenüberliegenden Ende zur bidirektionalen Kommunikation mit der Steuerungs- und Auswerteeinheit eingerichtet. Letztere ist dazu bestimmt, den Testvorgang als solchen auszulösen und insbesondere die vorhandenen Messketten nacheinander der eingangs dargelegten erfindungsgemäßen Prüfung zu unterziehen und die jeweils empfangenen elektrischen Signale, die einen bestimmten Verlauf eines empfangenen Testsignals charakterisieren, mit Referenzsignalen zu vergleichen, wobei aus diesem Vergleich eine Aussage über den aktuellen Zustand der Vorrichtung ableitbar ist. Anhand der unterschiedlichen, als Systemantwort jeweils empfangenen Strahlungsanteile, nämlich des reflektierten Strahlungsanteils einerseits und des, durch den Raum hindurch auf den Empfänger des gegenüberliegenden Messkopfes gelangten Strahlungsanteils andererseits lassen sich ferner differenzierte Aussagen über die Art einer eventuellen Störung ableiten.

Die Anzahl der im Rahmen einer erfindungsgemäßen Vorrichtung zusammengeschalteten Messketten richtet sich in Abhängigkeit von der Richtcharakteristik der zum Ein- und Auskoppeln von Strahlung benutzten Funktionselemente danach, dass der zu überwachende Raum vollständig erfasst wird. Soweit die Richtcharakteristiken dies zulassen, können zwei Messketten ausreichend sein.

Die Merkmale der Ansprüche 4 und 5 sind auf unterschiedliche konkrete Ausbildungen der Grenzflächen zu dem zu überwachenden Raum gerichtet. Im einfachsten Fall befinden sich jeweils ein Sender und ein Empfänger in einem geschlossenen Gehäuse, welches gegenüber dem Raum, der gegenüber dem zu überwachenden Raum durch ein dichtend wirkendes Fenster getrennt ist. Es besteht jedoch ferner die Möglichkeit, die Grenzfläche zu dem zu überwachenden Raum unmittelbar durch die Stirnseite eines Lichtleiters zu bilden. Entscheidend ist, welche Atmosphäre innerhalb des zu überwachenden Raumes herrscht, z.B. unter welchen Temperaturen sich dieser befindet, ob sich in diesem mechanisch oder chemisch aggressive Stoffe befinden usw.

Die Merkmale der Ansprüche 6 und 7 sind auf die weitere Ausgestaltung einer Messkette gerichtet, deren Grenzfläche unmittelbar durch das Ende eines Lichtleiters gebildet ist. Vorteilhafterweise wird der Lichtleiter bidirektional benutzt, so dass über die gleiche Grenzfläche zu dem zu überwachenden Raum ein Ein- und Auskoppeln von Strahlung möglich ist. An dem, dem zu überwachenden Raum abgekehrten Ende wirkt das Lichtleiterende mit einem Sender und einem Empfänger zusammen, die hier stets paarweise angeordnet sind. Diese Ausbildungsform der Vorrichtung hat den besonderen Vorteil, dass die zitierte Grenzfläche mit Abstand zu den Funktionselementen angeordnet werden kann, in denen die Auswertung der eingekoppelten Strahlung erfolgt, so dass letztgenannter Ort nicht den eventuell ungünstigen thermischen Einflüssen des zu überwachenden Raumes ausgesetzt ist.

Es bestehen vielfältige Möglichkeiten zur Ausgestaltung der Messkette, insbesondere deren zur Messwertbildung und -auswertung benutzter Funktionselemente.

Gemäß den Merkmalen des Anspruchs 8 ist vorgesehen, dass zwischen dem Fenster des Messkopfes einerseits und einem Empfänger/Senderpaar ein Element eines Lichtleiters angeordnet ist, der somit einen Teil der Signalübertragungsstrecke bildet.

Entsprechend den Merkmalen der Ansprüche 9 und 10 ist vorgesehen, dass sämtliche Elemente einer Messkette innerhalb eines einheitlichen Gehäuses angeordnet sein können, welches somit eine Baueinheit bildet, die zum Empfang eines einen Testvorgang auslösenden Signals bzw. zur Übertragung eines elektrischen, einen empfangenen Strahlungsanteil beschreibenden Signals eingerichtet ist. Der Vergleich mit einem Referenzsignal kann in dem Messkopf selbst erfolgen und nur das Ergebnis an eine Steuerungs- und Auswerteeinheit weitergeleitet werden. Die Steuerungs- und Auswerteeinheit übernimmt im letzteren Fall nur die Synchronisation der Sende- und Empfangsprozesse. Die räumliche Verteilung der Elemente einer Messkette kann somit nach Zweckmäßigkeitsgesichtspunkten gewählt werden. Insbesondere kann auch die Steuerungs- und Auswerteeinheit in die Messkette integriert und zusammen mit dieser in einem gemeinsamen Gehäuse angeordnet sein.

Die Merkmale der Ansprüche 11 und 12 sind auf Varianten der praktischen Ausbildung der Verbindung zwischen einer Steuerungs- und Auswerteeinheit einerseits und den Messketten andererseits gerichtet. Regelmäßig wird die Steuerungs- und Auswerteeinheit räumlich entfernt von den Messketten angeordnet sein, welches insbesondere bei größeren Anlagen von Vorteil ist. Die Verbindung kann durch Kabel, jedoch auch durch Lichtleiter, insbesondere flexible Lichtleiter gebildet sein - in Betracht kommt jedoch auch eine Funkstrecke.

Besonders zweckmäßig ist es, wenn die Steuerungs- und Auswerteeinheit entsprechend den Merkmalen des Anspruchs 13 mit einer externen Schnittstelle versehen ist, die zur Herstellung einer Verbindung mit einer übergeordneten Steuerung bestimmt ist. Es kann sich hierbei beispielsweise um die Steuerung der Anlage handeln, in welche der zu überwachende Raum eingebunden ist, da auch auf diesem Wege ein Beitrag zur Erzielung eines aussagekräftigen Testergebnisses geleistet werden kann. So besteht die Möglichkeit, den Testvorgang auf den in der Anlage ablaufenden Prozess abzustimmen, so dass Testvorgänge beispielsweise dann nicht ablaufen, wenn ohnehin mit einer starken Materialbefrachtung des genannten Raumes zu rechnen ist, um zu vermeiden, dass versehentlich infolge einer starken Dämpfung des empfangenen Signals eine entsprechende Verschmutzung signalisiert wird.

Die Erfindung wird im Folgenden unter Bezugnahme auf die in den Zeichnungen schematisch dargestellten Ausführungsformen näher erläutert werden. Es zeigen:
Fig. 1 eine erste Ausführungsform der Erfindung in einem Anwendungsfall bei einer Rohrleitung zur pneumatischen Förderung von Stoffen;
Fig. 2 ein zweites Ausführungsbeispiel der Erfindung in einem der Fig. 1 entsprechenden Anwendungsfall;
Fig. 3 ein weiteres Ausführungsbeispiel der Erfindung in einem den vorangegangenen Zeichnungsfiguren entsprechenden Anwendungsfall;
Fig. 4 eine Teildarstellung einer ersten Ausführungsform erfindungsgemäßer Messköpfe im Schnitt;
Fig. 5 eine Teildarstellung einer zweiten Ausführungsform erfindungsgemäßer Messköpfe im Schnitt;
Fig. 6 eine Teildarstellung einer dritten Ausführungsform erfindungsgemäßer Messköpfe im Schnitt;
Fig. 7 eine Teildarstellung einer weiteren Ausführungsform eines erfindungsgemäßen Messkopfes im Schnitt;
Fig. 8 eine weitere Darstellung eines erfindungsgemäßen Messkopfes im Schnitt.

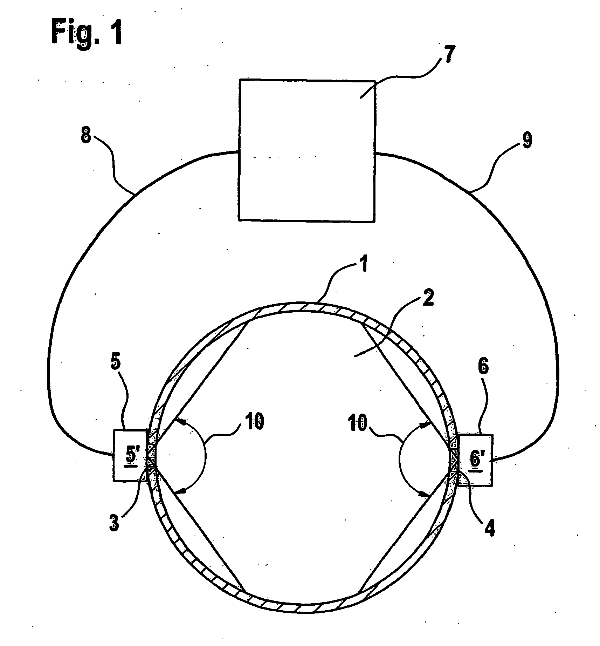

Mit 1 ist in Fig. 1 eine zur pneumatischen Förderung von körnigen bzw. faserigen Materialien bestimmte Rohrleitung bezeichnet, deren Innenraum den Raum 2 bildet, der hinsichtlich des Auftretens gefährlicher Betriebszustände zu überwachen ist, hier bezüglich des Auftretens von Funken oder anderer zündfähiger Gefahrenelemente wie z.B. Glimmnester innerhalb des Materialstromes, der sich senkrecht zur Zeichenebene der Fig. 1 bewegt.

Die Rohrleitung ist zu diesem Zweck an zwei einander diametral gegenüberliegenden Seiten mit Öffnungen 3, 4 versehen, die mit Gehäusen 5,6 zusammenwirken, die an der Rohrleitung 1 befestigt sind. Die Gehäuse 5, 6 beinhalten in einer im Folgenden noch näher zu erläuternden Weise sämtliche Elemente einer Messkette, die aus einem Messkopf bestehen, der in die jeweilige Bohrung 3, 4 hineinragt und eine Grenzfläche zu dem Raum 2 bildet, einem Sender sowie einem Empfänger, deren spektrale Empfindlichkeit auf die Detektion der in dem Materialstrom mitgeführten Funken oder anderer zündfähiger Gefahrenelemente wie z.B. Glimmnester begrenzt ist und Funktionselementen, deren Zweck darin besteht, eine über den Empfänger eingekoppelte Strahlung in ein dementsprechendes elektrisches Signal umzuformen bzw. ein eingehendes elektrisches Signal über den Sender in Strahlung nach Maßgabe einer definierten Signalform umzuwandeln. Die auf diese Weise in den Gehäusen 5, 6 zusammengefassten Baueinheiten stehen ausgangsseitig über Kabel 8, 9 mit einer entfernt angeordneten Steuerungs- und Auswerteeinheit 7 in Verbindung. Die einander gegenüberliegenden Messköpfe weisen untereinander etwa gleiche Öffnungswinkel von z.B. ca. 110° auf, so dass der gesamte Raum 2 lückenlos erfasst werden kann.

Zur Prüfung der Funktionssicherheit der gezeigten Vorrichtung wird über die Steuerungs- und Auswerteeinheit 7 zunächst ein Funktionstest der linksseitigen Baueinheit 5' dahingehend eingeleitet, dass über deren Sender ein Testsignal, z.B. ein charakteristischer Testimpuls abgestrahlt wird, der an der Grenzfläche zu dem Raum 2 teilweise reflektiert wird und diese teilweise durchtritt. Diese Aufspaltung wird quantitativ hauptsächlich durch die äußere Verschmutzung der genannten Grenzfläche beeinflusst. Durch den Empfänger der Baueinheit 5' wird der reflektierte Strahlungsanteil und durch den Empfänger der gegenüberliegenden Baueinheit 6' wird der in den Raum 2 ausgetretene Strahlungsanteil empfangen. Die von beiden Baueinheiten 5', 6' infolge des Testimpulses empfangenen Strahlungsanteile werden durch entsprechende elektrische Signale dargestellt und der Steuerungs- und Auswerteeinheit 7 zwecks Überprüfung, d.h. insbesondere zu einem Vergleich mit Referenzsignalen zugeleitet. Durch einen Testimpuls werden somit die Verschmutzung der Grenzfläche, der Zustand der Übertragungsstrecke zwischen der Grenzfläche sowie dem Sender bzw. dem Empfänger innerhalb der Baueinheit 5' und der Zustand der äußeren Übertragungsstrecke innerhalb des Raumes 2 einem Funktionstest unterzogen. Führt der Vergleich mit gespeicherten Referenzsignalen zu der Feststellung, dass eine Störung vorliegt, kann die Störung anhand ihrer Herkunft lokalisiert und über einen entsprechend ausgelösten Schaltvorgang signalisiert werden. Führt der Vergleich mit Referenzsignalen zu der Feststellung, dass keine signifikante Störung vorliegt, wird der gleiche Vorgang wiederholt, indem nunmehr ein Testimpuls über die Baueinheit 6' ausgestrahlt wird, wobei wiederum ein reflektierter Anteil über den Empfänger der Baueinheit 6' und ein in den Raum 2 gelangter Anteil über den Empfänger der Baueinheit 5' detektiert werden und wobei nach Messwertumformung mittels der Steuerungs- und Auswerteeinheit 7 ein Vergleich mit Referenzsignalen durchgeführt wird.

Da somit in jedem Fall die internen Verhältnisse einer Baueinheit 5', 6', dass heißt die Funktionsfähigkeit der in diesen installierten Messketten beginnend mit der Grenzfläche bis zur ausgangsseitigen Generierung eines elektrischen, den jeweiligen Strahlungsanteil repräsentierenden Signales, die Verschmutzung der Grenzflächen zu dem Raum 2 und der Zustand des Raumes 2 zwischen den einander gegenüberliegenden Baueinheiten einer Überprüfung unterzogen werden, beispielsweise auf das Auftreten einer übermäßigen Materialanhäufung, ist eine im Vergleich zu dem eingangs dargelegten Stand der Technik vollständige Überprüfung der Funktionssicherheit der gesamten Vorrichtung hinsichtlich innerer und äußerer Störquellen bzw. Defekten gegeben.

In den nachfolgenden Zeichnungsfiguren sind Funktionselemente, die mit denjenigen der Fig. 1 übereinstimmen, entsprechend beziffert.

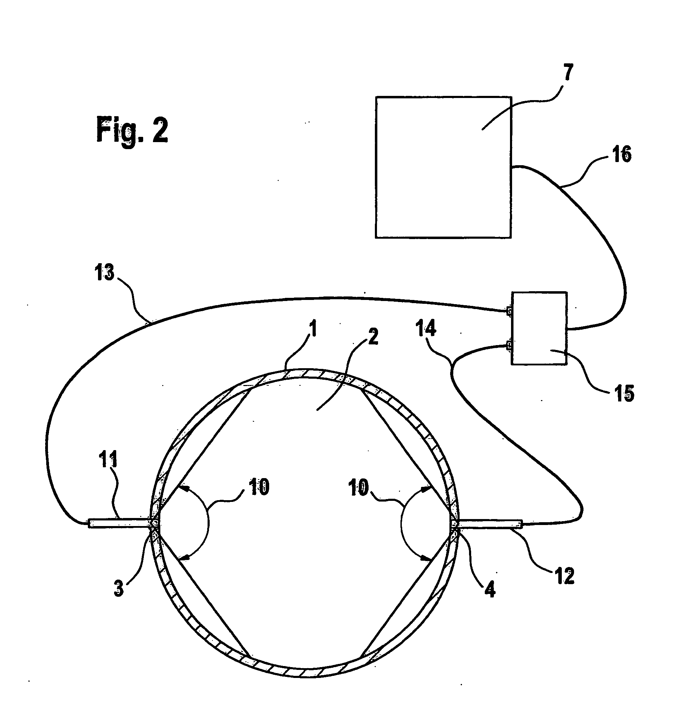

Wesensmerkmal des in Fig. 2 wiedergegebenen Ausführungsbeispiels ist eine andere Ausführung der jeweiligen Messketten, insbesondere der räumlichen Verteilung deren einzelner Komponenten. So wird die Grenzfläche zu dem Raum 2 einer jeden Messkette durch das stirnseitige Ende eines in die jeweilige Öffnung 3, 4 eingesetzten Lichtleiterstabes 11, 12 gebildet, der jeweils über einen Lichtleiter 13, 14 mit einer Baueinheit 15 in Verbindung steht. Der genaue Aufbau der Baueinheit 15 wird im Folgenden näher erläutert werden. Wesentlich ist insoweit, dass ein jeder der beiden Lichtleiter 13, 14 innerhalb der Baueinheit 15 mit einem Sender und einem Empfänger in Wirkverbindung steht, so dass jeder der beiden Lichtleiter zum Übertragen eines Lichtsignales in Richtung auf den Lichtleiterstab 11 und zum Empfangen eines Lichtsignales von diesem eingerichtet ist. Die Baueinheit 15 steht ihrerseits über ein Kabel 16 mit der Steuerungs- und Auswerteeinheit 7 in Verbindung.

Wesentlich insoweit ist, dass die Baueinheit 15 zur ausgangsseitigen Generierung eines elektrischen über die Leitung 16 zu übertragenden Signales eingerichtet ist, welches einen empfangenen Strahlungsanteil beschreibt sowie dahingehend, dass über einen jeden der jeweils einem Lichtleiter 13, 14 zugeordneten Sender ein Testimpuls in Richtung auf den jeweiligen Lichtleiterstab 11, 12 übertragbar ist.

Die grundsätzliche Arbeitsweise entspricht derjenigen des in Fig. 1 gezeigten Ausführungsbeispiels. Über die Steuerungs- und Auswerteeinheit 7 wird durch Ansteuerung der Baueinheit 15 zunächst über einen der beiden Lichtleiter 13, 14 ein definiertes Testsignal übertragen, welches an der Grenzfläche des jeweiligen Lichtleiterstabes 11,12 zu dem Raum 2 teilweise reflektiert wird und teilweise in den Raum 2 austritt und durch den jeweils gegenüberliegenden Lichtleiterstab empfangen wird. Der Testimpuls löst somit Antwortsignale aus, die zwei Strahlungsanteilen entsprechen, nämlich einem reflektierten Anteil und einem über den Raum 2 übertragenen Anteil, wobei beide Strahlungsanteile über die beiden Empfänger der Baueinheit 15 empfangen und nach Messwertumformung über das Kabel 16 als elektrisches Signal zwecks Auswertung der Steuerungs- und Auswerteeinheit 7 übertragen werden. Die Auswertung der beiden Strahlungsanteile wird entsprechend dem vorangegangenen Ausführungsbeispiel der Fig. 1 abgewickelt.

Der gesamte, entsprechend zwei Lichtleiterstäben 11, 12 aus zwei Phasen bestehende Prüfzyklus wird nacheinander bei beiden Lichtleiterstäben 11, 12 durchgeführt und kann über die Steuerungs- und Auswerteeinheit 7 automatisch ausgelöst werden.

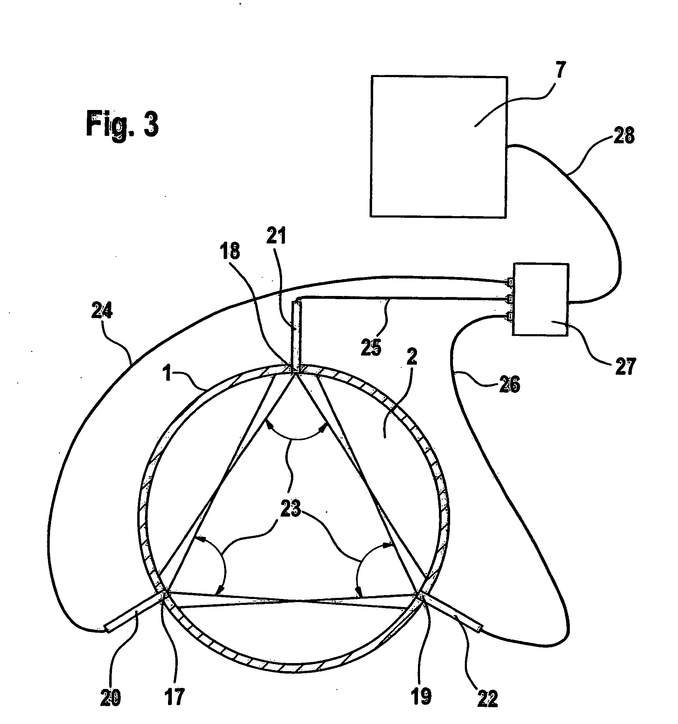

Bei dem vorstehend beschriebenen Ausführungsbeispiel gemäß Fig. 2 ist davon ausgegangen worden, dass der Öffnungswinkel 10 der beiden Lichtleiterstäbe eine solche Größe aufweist, die eine lückenlose Erfassung des Raumes 12 ermöglicht. Dies wird im Allgemeinen voraussetzen, dass z.B. die Oberfläche dementsprechend sphärisch bearbeitet ist, um diesen Öffnungswinkel zu erreichen. Bei dem Ausführungsbeispiel gemäß Fig. 3 ist der Querschnitt der Rohrleitung 1 dementsprechend mit drei, in Umfangsrichtung gleichmäßig verteilten Öffnungen 17, 18, 19 versehen, in die jeweils ein Lichtleiterstab 20, 21, 22 eingesetzt ist. Die Zahl der verwendeten Lichtleiterstäbe 20 bis 22 ist in Abhängigkeit von deren Öffnungswinkeln 23 gewählt, welcher bei der gezeigten Konfiguration etwa 70° beträgt, und zwar mit dem Ziel, eine vollständige Erfassung des Raumes 2 sicherzustellen.

Ein jeder der Lichtleiterstäbe 20 bis 22 steht über einen Lichtleiter 24, 25, 26 mit einer Baueinheit 27 in Verbindung, deren prinzipieller Aufbau der Baueinheit 15 gemäß Fig. 2 entspricht, mit lediglich dem Unterschied, dass anstelle von zwei hier drei Lichtleiter eingangsseitig angeschlossen sind. Die Baueinheit 27 steht wiederum ausgangsseitig über ein Kabel 28 mit der Steuerungs- und Auswerteeinheit 7 in Verbindung.

Wie bei den vorstehend beschriebenen Ausführungsbeispielen der Fig. 1 und 2 wird ein Testvorgang der Funktionssicherheit über die Steuerungs- und Auswerteeinheit 7 dadurch ausgelöst, dass über den Sender des Lichtleiters 24 ein definiertes Testsignal auf den Lichtleiterstab 20 übertragen wird, welches an der Grenzfläche zu dem Raum 2 teilweise reflektiert und über den Lichtleiter 24 auf den diesem innerhalb der Baueinheit 27 zugeordneten Empfänger übertragen wird. Ein weiterer, die Grenzfläche des Lichtleiterstabes 20 durchdringender und in den Raum 2 austretender Anteil wird über die Grenzflächen der beiden übrigen Lichtleiterstäbe 21, 22 eingekoppelt und den diesen innerhalb der Baueinheit 27 jeweils zugeordneten Empfängern übertragen. Im Ergebnis liegen somit drei Messwerte vor, die jeweils empfangenen Strahlungssignalen bzw. Signalformen entsprechen und die über das Kabel 28 nach Umformung in entsprechende elektrische Signale der Steuerungs- und Auswerteeinheit 7 zur Auswertung übertragen werden. Dieser Testvorgang wird in der Folge zyklisch über die Lichtleiterstäbe 21, 22 wiederholt, so dass ein vollständiger Prüfzyklus entsprechend den drei eingesetzten Lichtleiterstäben 20 bis 22 drei Teilvorgänge umfasst. Führt einer der Teilvorgänge zur Signalisierung einer Störung, sei es infolge einer Verschmutzung der Grenzfläche oder einer ungewöhnlichen Materialanhäufung innerhalb des Raumes 2, welche auf ein durch den Raum 2 zu übertragendes Signal eine dementsprechende Dämpfung ausübt, wird über die Steuerungs- und Auswerteeinheit 7 eine entsprechende Störanzeige signalisiert.

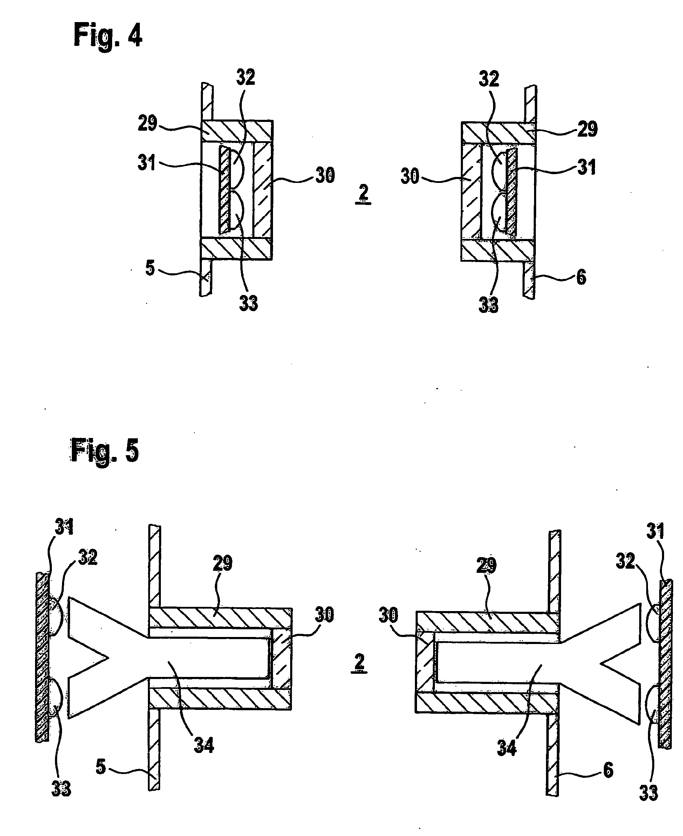

Fig. 4 zeigt eine konkrete Ausbildung der zum Senden und Empfangen eingerichteten Teile der bei der Vorrichtung gemäß Fig. 1 beispielsweise eingesetzten Gehäuse 5, 6 bzw. Baueinheiten 5', 6'. Die Gehäuse 5, 6 sind hiernach mit einer beispielsweise rohrelementartigen Befestigung 29 versehen, die in eine Öffnung einer Gehäusewandung eingesetzt ist und in deren vorderseitige, d.h. dem Raum 2 zugekehrte Stirnseite eine strahlungsdurchlässige Abdeckung 30, z.B. eine Glas- oder Kunststoffscheibe dichtend eingesetzt ist. Die Befestigung 29 kann jeweils in die Öffnung 3, 4 der Wandung der Rohrleitung 1 eingesetzt sein.

Mit 31 ist jeweils eine Trägerplatine bzw. eine Leiterplatte bezeichnet, auf der unter anderem ein Sender 32 und ein Empfänger 33 angeordnet sind. Praktisch kann es sich bei diesen Funktionselementen um eine Sende- und eine Empfangsdiode handeln, deren spektrale Empfindlichkeit nach Maßgabe hier der Detektion von Funken oder anderen zündfähigen Gefahrenelementen wie z.B. Glimmnestern, eingeschränkt ist. Zeichnerisch nicht dargestellt sind sonstige, auf der jeweiligen Leiterplatte angeordnete Funktionselemente, die zur Energieversorgung, zur Steuerung und insbesondere zur Messwertumformung der über den Sender bzw. den Empfänger aus- bzw. eingekoppelten Signalanteile bestimmt sind. Wesentlich ist, dass der Sender 32 und der Empfänger 33 einander dicht benachbart und der Innenseite der strahlungsdurchlässigen Abdeckung 30 unmittelbar gegenüberliegend mit geringem Abstand angeordnet sind. Die Außenseite der Abdeckung 30 bildet in diesem Fall die Grenzfläche zu dem Raum 2, durch den sich der auf Funkenflug oder andere zündfähige Gefahrenelemente zu überwachende Materialstrom bewegt.

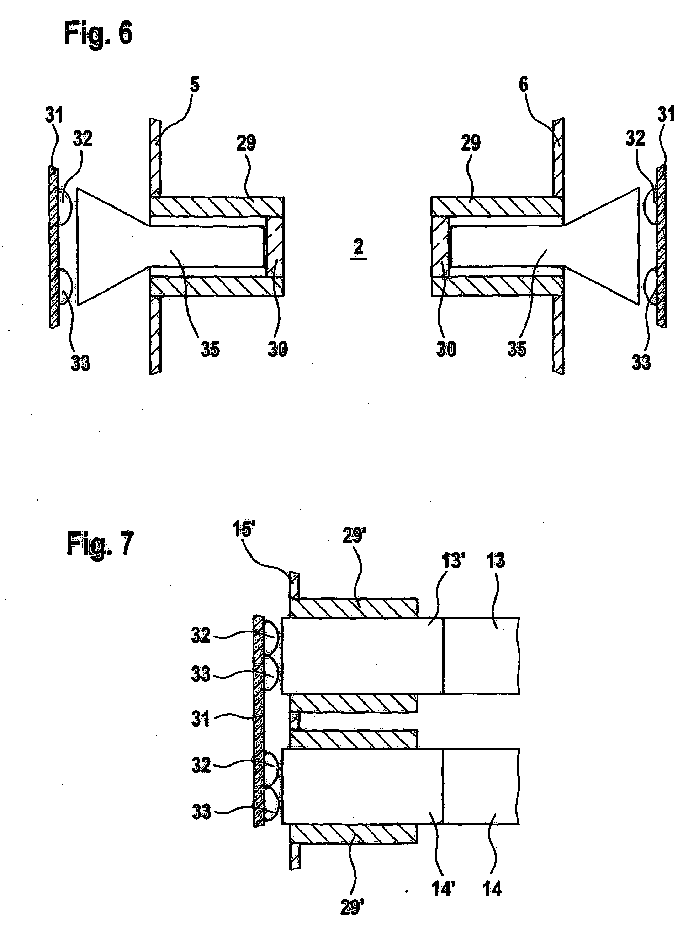

Zur Ankopplung des Senders 32 sowie des Empfängers 33 an die strahlungsdurchlässige Abdeckung 30 bestehen unterschiedliche Möglichkeiten, von denen die im Folgenden zu beschreibenden Figuren 5, 6 ohne Anspruch auf Vollständigkeit lediglich als mögliche Varianten zu der Darstellung gemäß Fig. 4 anzusehen sind.

Zwischen der strahlungsdurchlässigen Abdeckung 30 einerseits und den Sendern 32 bzw. den Empfängern 33 befindet sich gemäß Fig. 5 bzw. Fig. 6 ein Lichtleiterstab 34 bzw. 35, der mit der Maßgabe angelegt ist, dass dessen innerhalb einer rohrelementartigen Befestigung 29 verlaufender Abschnitt sowohl zum Senden als auch um Empfangen von Signalen eingerichtet ist, so dass sich an diesen Abschnitt außerhalb der Befestigung eine Verzweigung wie in Fig. 5 oder lediglich eine Erweiterung des Querschnitts, wie in Fig. 6 anschließen, und zwar mit der Maßgabe, dass der Sender 32 und der Empfänger 33 mit dem Lichtleiterstab 34 in Wechselwirkung treten können. An den Lichtleiterstab 34 können sich gleichermaßen flexible Lichtleiterelemente anschließen, ein Gesichtspunkt der insbesondere dann von Interesse ist, wenn innerhalb des Raumes 2 mit relativ hohen Temperaturen zu rechnen ist und die Trägerplatine 31 nebst sämtlichen, auf.dieser installierten elektronischen Bauelementen vor übermäßiger Wärmeeinwirkung geschützt angeordnet werden muss. Gegenüber der Ausführungsform gemäß Fig. 4 eröffnen diese Varianten den Vorteil,
dass der Sender und der Empfänger mit größerem Abstand voneinander auf der Platine untergebracht werden können. Darüber hinaus kann eine Öffnung, in welche die Befestigung 29 einzusetzen ist, dementsprechend kleiner ausgebildet sein.

Das in Fig. 7 gezeigte Ausführungsbeispiel kann bei den Baueinheiten 15, 27 entsprechend den Fig. 2 und 3 eingesetzt werden. Hiernach sind die Enden 13', 14' der Lichtleiter 13, 14 in zylindrische Befestigungen 29' eingesetzt, die ihrerseits in Öffnungen der Wandung 15' beispielsweise der Baueinheit 15 eingesetzt sind. Die Stirnseiten der Lichtleiterenden 13', 14' liegen unmittelbar den auf einer Leiterplatine 31 paarweise angeordneten Sendern 32 bzw. Empfängern 33 gegenüber, so dass jeder der beiden Lichtleiter 13, 14 mit einem ihm zugeordneten Sender/Empfängerpaar in Wechselwirkung treten kann entsprechend der oben zu Fig. 2 dargestellten Wirkungsweise. Das gleiche Prinzip ist naturgemäß auch bei dem unter Fig. 3 beschriebenen Ausführungsbeispiel anwendbar, mit dem Unterschied lediglich, dass nunmehr drei Paare von Sendern und Empfängern jeweils drei Lichtleiterenden gegenüberliegend angeordnet sind.

Grundsätzlich kann auch bei der in Fig. 7 gezeigten Variante unter Zwischenanordnung starrer Lichtleiterstäbe wie bei Fig. 6 eine Verzweigung stattfinden, beispielsweise zwecks Anpassung an die in der Fläche der Leiterplatine voneinander beabstandeten Sender und Empfänger.

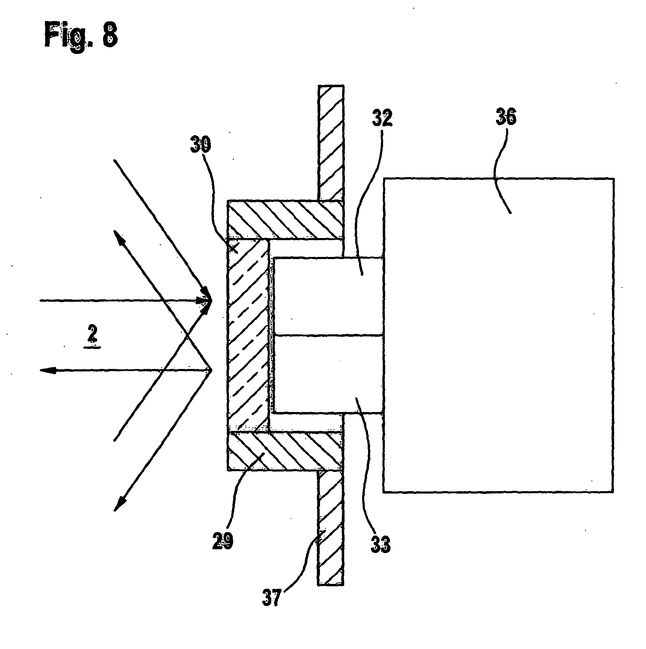

Bei den vorstehend wiedergegebenen Ausführungsbeispielen wird stets davon ausgegangen, dass die Steuerungs- und Auswerteeinheit 7 räumlich getrennt von den Baueinheiten 5', 6', 15 angeordnet ist, welche die Komponenten der jeweiligen Messkette enthalten - es sind dies die Elemente, die funktionell zwischen der Schnittstelle zu dem Raum 2 und den Elementen angeordnet sind, die zur ausgangsseitigen Generierung verarbeitbarer, empfangene Strahlung beschreibender elektrischer Signale sowie und zur Übertragung eines Steuersignals zwecks Generierung eines definierten Testimpulses bestimmt sind. In Abweichung hiervon ist bei dem Ausführungsbeispiel gemäß Fig. 8 eine Steuerungs- und Auswerteeinheit 36 vorgesehen, die mit den genannten Elementen der Messkette räumlich unmittelbar, d.h. in einem einheitlichen Gehäuse zusammengefasst ist. Mit 32 sind wiederum ein Sender und mit 33 ein Empfänger bezeichnet, die der zum Ein- und Auskoppeln von Strahlung bestimmten strahlungsdurchlässigen Abdeckung 30 stirnseitig unmittelbar benachbart angeordnet sind. Sämtliche Komponenten sind in einem Gehäuse 37 zusammengefasst, welches eine äußere Schnittstelle aufweist, die in Verbindung mit einer übergeordneten Steuerung der Auslösung eines Testvorganges dient. Bezogen auf eine Ausführungsform der erfindungsgemäßen Vorrichtung gemäß Fig. 1 kann eine in einem Gehäuse 37 untergebrachte Baueinheit jede der dortigen Baueinheiten 5', 6' ersetzen, so dass sich insgesamt ein verringerter Installationsaufwand ergibt.

Unabhängig von der in Fig. 8 gezeigten räumlichen Anordnung der zur Realisierung der Steuerungs- und Auswerteeinheit erforderlichen Bauelemente ist letztere vorteilhaft stets mit einer externen Schnittstelle zur Anbindung an eine übergeordnete Steuerung versehen, so dass die durchzuführenden Testvorgänge mit dem Prozess, in den der Materialstrom innerhalb der Rohrleitung 1 eingebunden ist, abgestimmt werden können, um beispielsweise zu vermeiden, dass ein Test zu Zeiten durchgeführt wird, in denen eine hohe Materialdichte innerhalb der Rohrleitung ansteht.

## Patentansprüche

1. Verfahren zur Auswertung elektromagnetischer, zur Darstellung zumindest eines Parameters eines zu überwachenden Raumes (2) benutzter Strahlung, wobei der zu überwachende Raum (2) mit einem, zum Ein- und zum Auskoppeln von Strahlung bestimmten, eine Grenzfläche zu dem zu überwachenden Raum (2) bildenden ersten Messkopf versehen ist, wobei wenigstens ein erster Empfänger (33) und ein erster Sender (32) benutzt werden, die einen Teil des Messkopfes bilden, wobei ferner zumindest ein weiterer, dem ersten Messkopf gegenüberliegend angeordneter, mit einem zweiten Empfänger (33) und einem zweiten Sender (32) ausgerüsteter zweiter Messkopf benutzt wird, **dadurch gekennzeichnet dass** zur Prüfung der Funktion einer jeden, zumindest aus einem Messkopf, einem Sender (32) und einem Empfänger bestehenden einen Messkette ein aus dem Raum (2) eintretender, von dem anderen Sender des gegenüberliegenden anderen Messkopfes der anderen Messkette emittierter Strahlungsanteil mit dem Empfänger dieser einen Messkette detektiert wird und ein an der Grenzfläche zwischen dem anderen Messkopf und dem zu überwachenden Raum (2) reflektierter, von dem Sender der anderen Messkette herrührender Strahlungsanteil durch den Empfänger (33) dieser anderen Messkette detektiert wird und dass aus den Messwerten beider Strahlungsanteile ein die Funktion der jeweils zu prüfenden einen Messkette beschreibendes Signal gebildet wird.

2. Vorrichtung zur Durchführung des Verfahrens nach Anspruch 1 mit einem ersten Messkopf, der mit einem ersten Empfänger (33) und einem ersten Sender (32) in Wirkverbindung steht, wobei der erste Messkopf eine Grenzfläche zu dem zu überwachenden Raum (2) bildet und zum Aus- und Einkoppeln von Strahlung in den/aus dem Raum (2) bestimmt und eingerichtet ist, wobei dem ersten Messkopf wenigstens ein weiterer zweiter Messkopf gegenüberliegend angeordnet ist, der ebenfalls mit einem zweiten Empfänger (33) und einem zweiten Sender (32) in Wirkverbindung steht, **dadurch gekennzeichnet dass** jede aus einem Messkopf, einem Sender (32) und einem Empfänger (33) bestehende eine Messkette zum Einkoppeln eines von dem Sender (33) der gegenüberliegenden anderen Messkette emittierten und eines an der Grenzfläche zu dem zu überwachenden Raumes (2) reflektierten, von dem Sender (33) der genannten einen Messkette emittierten Strahlungsanteiles eingerichtet ist, dass jede Messkette zur ausgangsseitigen Generierung von die genannten beiden Strahlungsanteile beschreibenden Signalen eingerichtet ist und dass jede der Messketten mit einer zur Auswertung dieser Signale bestimmten Steuerungs- und Auswerteeinheit (7,36) in Verbindung steht, die zur Durchführung des Verfahrens nach Anspruch 1 angepasst ist.

3. Vorrichtung nach Anspruch 2, **dadurch gekennzeichnet, dass** die Messketten nach Maßgabe der Richtcharakteristik der zum Ein- bzw. Auskoppeln von Strahlung benutzten Funktionselemente in einer dementsprechenden Anzahl mit Hinblick auf eine vollständige Erfassung des zu überwachenden Raumes (2) räumlich verteilt angeordnet sind.

4. Vorrichtung nach Anspruch 3 oder 4, **dadurch gekennzeichnet, dass** die Grenzfläche zu dem zu überwachenden Raum (2) durch das Fenster eines Gehäuses (5,6,37) gebildet ist, in welchem zumindest ein Sender (32) und ein Empfänger (33) angeordnet sind.

5. Vorrichtung nach Anspruch 2 oder 3, **dadurch gekennzeichnet, dass** die Grenzfläche zu dem zu überwachenden Raum (2) durch das Ende eines Lichtleiters (13,14;24,25,26) gebildet ist.

6. Vorrichtung nach Anspruch 5, **dadurch gekennzeichnet, dass** im Rahmen einer Messkette ein Lichtleiter (13,14;24,25,26) sowohl mit dem Sender (32) als auch mit dem Empfänger (33) in Wirkverbindung steht.

7. Vorrichtung nach Anspruch 5 oder 6, **dadurch gekennzeichnet, dass** die jeweils paarweise eingesetzten Sender (32) und Empfänger (33) sämtlich in einem einheitlichen Gehäuse räumlich zusammengefasst angeordnet sind und dass das genannte Gehäuse über eine der Anzahl der Sender/Empfängerpaare entsprechende Anzahl von Lichtleitern (13,14;24,25,26) mit den jeweils die genannte Grenzfläche des Messkopfes bildenden Lichtleiterenden in Verbindung stehen.

8. Vorrichtung nach einem der vorangegangenen Ansprüche 2 bis 4, **dadurch gekennzeichnet, dass** die innerhalb des Gehäuses (5,6) zwischen dem Fenster einerseits und dem Sender (32) sowie dem Empfänger (33) andererseits bestehende Signalübertragungsstrecke durch ein Element eines Lichtleiters gebildet ist.

9. Vorrichtung nach einem der vorangegangenen Ansprüche 2 bis 4 oder 8, **dadurch gekennzeichnet, dass** innerhalb des Gehäuses (5,6) wenigstens ein Sender/Empfängerpaar sowie sämtliche zur Auswertung der erfassten Strahlungsanteile erforderlichen Funktionselemente räumlich zusammengefasst angeordnet sind, so dass das Gehäuse (5,6) eine zur ausgangsseitigen Generierung eines das Ergebnis einer Funktionsüberprüfung der jeweiligen Messkette eingerichtete Baueinheit (5',6') bildet.

10. Vorrichtung nach einem der vorangegangenen Ansprüche 2 bis 9, **dadurch gekennzeichnet, dass** die Steuerungs- und Auswerteeinheit (36) mit der Messkette räumlich zusammengefasst, beispielsweise in einem einheitlichen Gehäuse angeordnet ist.

11. Vorrichtung nach einem der vorangegangenen Ansprüche 2 bis 9, **dadurch gekennzeichnet, dass** die Verbindung zwischen der Steuerungs- und Auswerteeinheit (7) einerseits und den Messketten andererseits durch Kabel (8,9,16,28) gebildet ist.

12. Vorrichtung nach einem der vorangegangenen Ansprüche 2 bis 9, **dadurch gekennzeichnet, dass** die Verbindung zwischen der Steuerungs- und Auswerteeinheit (7) einerseits und den Messketten andererseits durch eine Funkverbindung gebildet ist.

13. Vorrichtung nach einem der vorangegangenen Ansprüche 2 bis 12, **dadurch gekennzeichnet, dass** die Steuerungs- und Auswerteeinheit (7,36) mit einer externen Schnittstelle versehen ist, die zur Herstellung einer Verbindung mit einer übergeordneten Steuerung bestimmt und eingerichtet ist.

## Claims

1. Method for evaluating electromagnetic radiation used to depict at least one parameter of a space (2) to be monitored, wherein the space (2) to be monitored is provided with a first measuring head, which is intended to couple and decouple radiation and forms a boundary surface with respect to the space (2) to be monitored, wherein at least one first receiver (33) and one first transmitter (32) are used which form a part of the measuring head, wherein furthermore at least one further second measuring head is used which is disposed opposite the first measuring head and is equipped with a second receiver (33) and a second transmitter (32), **characterised in that** in order to check the function of each one measuring chain, which consists at least of a measuring head, a transmitter (32) and a receiver, a portion of the radiation, which enters from the space (2) and is emitted by the other transmitter of the opposite other measuring head of the other measuring chain, is detected with the receiver of this one measuring chain, and a portion of the radiation, which is reflected on the boundary surface between the other measuring head and the space (2) to be monitored and originates from the transmitter of the other measuring chain, is detected by the receiver (33) of this other measuring chain, and that from the measurement values of the two radiation portions a signal is formed which describes the function of the respective measuring chain to be checked.

2. Device for carrying out the method as claimed in claim 1, having a first measuring head which is operatively connected to a first receiver (33) and a first transmitter (32), wherein the first measuring head forms a boundary surface with respect to the space (2) to be monitored and is intended and arranged to couple and decouple radiation into/out of the space (2), wherein at least one further second measuring head is disposed opposite the first measuring head and is also operatively connected to a second receiver (33) and a second transmitter (32), **characterised in that** each one measuring chain consisting of a measuring head, a transmitter (32) and a receiver (33) is arranged to couple a portion of the radiation emitted by the transmitter (33) of the opposite other measuring chain and a portion of the radiation reflected on the boundary surface with respect to the space (2) to be monitored, emitted by the transmitter (33) of the said one measuring chain, that each measuring chain is arranged for output-side generation of signals describing the said two radiation portions, and that each of the measuring chains is connected to a control and evaluation unit (7, 36) which is intended for evaluation of these signals and which is adapted to carry out the method as claimed in claim 1.

3. Device as claimed in claim 2, **characterised in that** the measuring chains are disposed in a spatially distributed manner according to the radiation pattern of the functional elements used to couple and/or decouple the radiation, in a corresponding number with respect to a complete detection of the space (2) to be monitored.

4. Device as claimed in claim 3 or 4, **characterised in that** the boundary surface with respect to the space (2) to be monitored is formed by the window of a housing (5, 6, 37) in which at least one transmitter (32) and one receiver (33) are disposed.

5. Device as claimed in claim 2 or 3, **characterised in that** the boundary surface with respect to the space (2) to be monitored is formed by the end of a light conductor (13, 14; 24, 25, 26).

6. Device as claimed in claim 5, **characterised in that** within the framework of a measuring chain a light conductor (13, 14; 24, 25, 26) is operatively connected to both the transmitter (32) and also to the receiver (33).

7. Device as claimed in claim 5 or 6, **characterised in that** the transmitters (32) and receivers (33), which are used in pairs in each case, are all disposed in a spatially combined manner in a unitary housing and that the said housing is connected to the respective light conductor ends forming the said boundary surface of the measuring head by means of a number of light conductors (13, 14; 24, 25, 26) corresponding to the number of transmitter/receiver pairs.

8. Device as claimed in any one of the preceding claims 2 to 4, **characterised in that** the signal transmission path, which exists within the housing (5, 6) between the window on the one hand and the transmitter (32) and receiver (33) on the other, is formed by an element of a light conductor.

9. Device as claimed in any one of the preceding claims 2 to 4 or 8, **characterised in that** within the housing (5, 6) at least one transmitter/receiver pair and all the functional elements necessary for evaluation of the detected portions of the radiation are disposed in a spatially combined manner so that the housing (5, 6) forms a constructional unit (5', 6') arranged for output-side generation of a the result *[sic]* of a functional examination of the respective measuring chain.

10. Device as claimed in any one of the preceding claims 2 to 9, **characterised in that** the control and evaluation unit (36) is spatially combined with the measuring chain, for example in a unitary housing.

11. Device as claimed in any one of the preceding claims 2 to 9, **characterised in that** the connection between the control and evaluation unit (7) on the one hand and the measuring chains on the other is formed by cables (8, 9, 16, 28).

12. Device as claimed in any one of the preceding claims 2 to 9, **characterised in that** the connection between the control and evaluation unit (7) on the one hand and the measuring chains on the other is formed by a radio connection.

13. Device as claimed in any one of the preceding claims 2 to 12, **characterised in that** the control and evaluation unit (7, 36) is provided with an external interface which is intended and arranged to produce a connection to a higher-order control.

## Revendications

1. Procédé pour l'évaluation de rayonnement électromagnétique utilisé pour représenter au moins un paramètre d'un local à surveiller (2), dans lequel le local à surveiller (2) est muni d'une première tête de mesure destinée à émettre et recevoir un rayonnement et formant une interface avec le local à surveiller (2), en utilisant au moins un premier récepteur (33) et un premier émetteur (32) qui font partie de la tête de mesure, qui utilise en outre au moins une autre deuxième tête de mesure disposée face à la première tête de mesure et équipée d'un deuxième récepteur (33) et d'un deuxième émetteur (32), **caractérisé en ce que** pour vérifier le fonctionnement de chaque chaîne de mesure formée au moins d'une tête de mesure, d'un émetteur (32) et d'un récepteur, une part de rayonnement provenant du local (2) et émise par l'autre émetteur de l'autre tête de mesure opposée de l'autre chaîne de mesure est détectée avec le récepteur de la chaîne de mesure et une part de rayonnement réfléchie à l'interface entre l'autre tête de mesure et le local à surveiller (2) et provenant de l'émetteur de l'autre chaîne de mesure est détecté par le récepteur (33) de cette autre chaîne de mesure et un signal décrivant le fonctionnement de la chaîne de mesure à contrôler est formé à partir des valeurs de mesure des deux parts de rayonnement.

2. Dispositif pour la mise en oeuvre du procédé selon la revendication 1 avec une première tête de mesure en liaison active avec un premier récepteur (33) et un premier émetteur (32), dans lequel la première tête de mesure forme une interface avec le local à surveiller (2) et est conçue et installée pour émettre et recevoir un rayonnement dans ou à partir du local (2), dans lequel il est prévu en face de la première tête de mesure au moins une autre deuxième tête de mesure qui est également en liaison active avec un deuxième récepteur (33) et un deuxième émetteur (32), **caractérisé en ce que** chaque chaîne de mesure formée d'une tête de mesure, d'un émetteur (32) et d'un récepteur (33) est conçue pour la réception d'une part de rayonnement réfléchie par l'émetteur (33) de l'autre chaîne de mesure opposée et d'une part de rayonnement réfléchie par l'interface avec le local à surveillée (2) et émise par l'émetteur (33) de ladite chaîne de mesure, **en ce que** chaque chaîne de mesure est conçue pour générer en sortie lesdits signaux décrivant les deux parts de rayonnement et **en ce que** chacune des chaînes de mesure est en liaison avec une unité de commande et d'interprétation (7, 36) destinée à interpréter ces signaux, qui est adaptée à la mise en oeuvre du procédé selon la revendication 1.

3. Dispositif selon la revendication 2, **caractérisé en ce que** les chaînes de mesure sont réparties dans l'espace en fonction de la caractéristique directionnelle des éléments fonctionnels utilisés pour l'émission et la réception du rayonnement, dans un nombre approprié en vue d'une couverture complète du local à surveiller (2).

4. Dispositif selon la revendication 3 ou 4, **caractérisé en ce que** l'interface avec le local à surveiller (2) est formée par la fenêtre d'un boîtier (5, 6, 37) dans lequel sont disposés au moins un émetteur (32) et un récepteur (33).

5. Dispositif selon la revendication 2 ou 3, **caractérisé en ce que** l'interface avec le local à surveiller (2) est formée par l'extrémité d'un guide d'ondes lumineuses (13, 14 ; 24, 25, 26).

6. Dispositif selon la revendication 5, **caractérisé en ce que** dans le cadre d'une chaîne de mesure, un guide d'ondes lumineuses (13, 14 ; 24, 25, 26) est en liaison active aussi bien avec l'émetteur (32) qu'avec le récepteur (33).

7. Dispositif selon la revendication 5 ou 6, **caractérisé en ce que** les émetteurs (32) et récepteurs (33) utilisés par paires sont tous réunis du point de vue spatial dans un même boîtier et **en ce que** ledit boîtier communique par un nombre de guides d'ondes lumineuses (13, 14 ; 24, 25, 26) correspondant au nombre de paires d'émetteur et récepteur avec les extrémités des guides d'ondes lumineuses formant ladite interface de la tête de mesure.

8. Dispositif selon l'une des revendications 2 à 4, **caractérisé en ce que** le trajet de transmission des signaux formé à l'intérieur du boîtier (5, 6) entre la fenêtre d'une part et l'émetteur (32) ainsi que le récepteur (33) d'autre part est formé par un élément d'un guide d'ondes lumineuses.

9. Dispositif selon l'une des revendications 2 à 4 ou 8, **caractérisé en ce qu'**à l'intérieur du boîtier (5, 6), au moins une paire d'émetteur/récepteur et tous les éléments fonctionnels nécessaires à l'interprétation des parts de rayonnement captées sont réunis du point de vue spatial de telle sorte que le boîtier (5, 6) forme une unité de construction (5', 6') conçue pour générer en sortie le résultat d'un contrôle du fonctionnement de chaque chaîne de mesure.

10. Dispositif selon l'une des revendications 2 à 9, **caractérisé en ce que** l'unité de commande et d'interprétation (36) est réunie du point de vue spatial avec la chaîne de mesure, par exemple disposée dans un même boîtier.

11. Dispositif selon l'une des revendications 2 à 9, **caractérisé en ce que** la liaison entre l'unité de commande et d'interprétation (7) et les chaînes de mesure est formée par des câbles (8, 9, 16, 28).

12. Dispositif selon l'une des revendications 2 à 9, **caractérisé en ce que** la liaison entre l'unité de commande et d'interprétation (7) et les chaînes de mesure est formée par une liaison radio.

13. Dispositif selon l'une des revendications 2 à 12, **caractérisé en ce que** l'unité de commande et d'interprétation (7, 36) est munie d'une interface externe conçue et installée pour établir une liaison avec une commande hiérarchiquement supérieure.
